Europäisches Patentamt

European Patent Office

Office européen des brevets

(11) Veröffentlichungsnummer: **0 476 175 A1**

# (12) EUROPÄISCHE PATENTANMELDUNG

(21) Anmeldenummer: **90118137.0**

(22) Anmeldetag: **20.09.90**

(51) Int. Cl.5: **G05B 19/403**, G06F 15/16

(43) Veröffentlichungstag der Anmeldung:
**25.03.92 Patentblatt 92/13**

(84) Benannte Vertragsstaaten:
**CH DE ES FR GB IT LI SE**

(71) Anmelder: **SIEMENS AKTIENGESELLSCHAFT**

Wittelsbacherplatz 2
**W-8000 München 2(DE)**

(72) Erfinder: **Dorn, Hermann, Dipl.-Ing. (FH)**
**Schlossweg 29**
**W-8525 Rathsberg(DE)**

(54) **Einrichtung zum Betrieb eines Mehrprozessorsystems, insbesondere einer numerischen Steuerung.**

(57) Das System beinhaltet mehrere Prozessoren (P1,P2,P3) mit unterschiedlichem Prioritätsrang. Das Gesamtsystem startet seinen Betrieb als arbitrierendes System. Es wird dann jeweils eine bei gleichzeitiger Anforderung resultierende Konfliktzeit ermittelt und es erfolgt im weiteren eine Verzögerung des Verarbeitungstaktes des jeweils als wartend erkannten Prozessors (P2,P3) um eben diese Wartezeit (T4). Damit geht das System sozusagen in eine Zeitscheibensteuerung über, wobei die Arbitrierung im Hintergrund aktiv bleibt und bedarfsweise eingreift. Die Wartezeiten der Prozessoren (P2,P3) sind damit minimiert.

FIG 1

Die Erfindung bezieht sich auf eine Einrichtung zum Betrieb eines Mehrprozessorsystems, insbesondere einer numerischen Steuerung, bei dem die einzelnen Prozessoren mittels Busarbitern und von diesen angesteuerten Buskoppelgliedern prioritätsgerecht an ein gemeinsames Bussystem schaltbar sind und wobei die jeweils im Verarbeitungstakt erfolgenden Busanforderungen jeweils blockweise zusammengefaßt sind.

Mehrprozessorsysteme können zu den verschiedensten Zwecken in numerischen Steuerungen für Werkzeugmaschinen und Robotern zum Einsatz kommen. So ist es beispielsweise möglich, entsprechend der Anzahl der zu verfahrenden Achsen für deren Lageregelung mehrere Prozessoren zu verwenden. Der Betrieb diese Prozessoren an einem gemeinsamen Bussystem wird dann jeweils durch Busarbiter gesteuert. Eine Einrichtung dieser Art ist beispielsweise aus der DE-OS 35 01 968 bekannt.

Bei der numerischen Steuerungstechnik ist es üblich, daß alle Prozessoren durch eine gemeinsame Zeitbasis, die den Verarbeitungstakt bestimmt, koordiniert werden. Jeweils zum Abtastzeitpunkt fordern dann die Prozessoren bedarfsweise den gemeinsamen Bus an. Dieser Zugriff wird, wie oben bereits erwähnt, arbitriert, um Buskonflikte zu vermeiden. Bevorrechtigte Prozessoren, z.B. Masterrechner, werden vor nachrangigen Prozessoren, z.B. Slaverechnern, bevorzugt behandelt. Die Slaverechner müssen deshalb solange warten, bis die jeweils bevorrechtigten Rechner ihre Busanforderung wegnehmen. Während der Wartezeit kann ein Rechner jedoch keine anderen Aufgaben ausführen. Die Rechenleistung des Gesamtsystems verringert sich daher um die Wartezeit.

Vom Erfinder ist nun erkannt worden, daß es im Normalbetrieb vorteilhafter ist, wenn die einzelnen Zugriffe zu den Prozessoren sozusagen nach einem "Zeitscheibenprinzip" erfolgen, weil dann die Wartezeiten, die für den Betrieb völlig nutzlos sind, entfallen. Anzustreben ist damit ein Zeitscheibenbetrieb, wie er ähnlich in der DE-Anmeldung 39 32 590 bereits vorgeschlagen wird. Bei einem solchen festen Zeitscheibenbetrieb müssen jedoch die Grenzen der Zeitscheiben jeweils so gewählt werden, daß auf keinen Fall Überschneidungen der Zeitscheiben vorliegen. Demzufolge hat der Betrieb der Prozessoren stets nach den strengen Regeln der Zeitscheiben zu erfolgen, damit keine Konflikte eintreten, die bei diesem System nicht tolerierbar sind.

Aufgabe der Erfindung ist es, eine Einrichtung der eingangs genannten Art so auszubilden, daß das bewährte, über Busarbiter gesteuerte Verfahren prinzipiell zwar beibehalten wird, daß jedoch dennoch eine weitgehende Verringerung der Wartezeiten ermöglicht wird, wie diese für ein zeitscheibengesteuertes System typisch ist.

Gemäß der Erfindung wird diese Aufgabe dadurch gelöst, daß Schaltmittel zum Registrieren der jeweiligen beim Arbitrieren anfallenden Wartezeit der Prozessoren vorgesehen sind, und daß ferner Mittel zum Verzögern der weiteren Buszugriffsanforderungen der wartepflichtigen Prozessoren vorgesehen sind, wobei die Verzögerungszeit dieser Mittel so eingestellt wird, daß diese mindestens der zuvor registrierten Wartezeit entspricht.

Technisch läßt sich eine solche Zugriffsverzögerung äußerst leicht dadurch realisieren, daß die Mittel den jeweiligen Verarbeitungstakt der wartepflichtigen Prozessoren verzögern.

Ein Ausführungsbeispiel der Erfindung ist in der Zeichnung dargestellt und wird im folgenden näher erläutert. Es zeigen:

FIG 1 ein Blockschaltbild und
FIG 2 signifikante Diagramme.

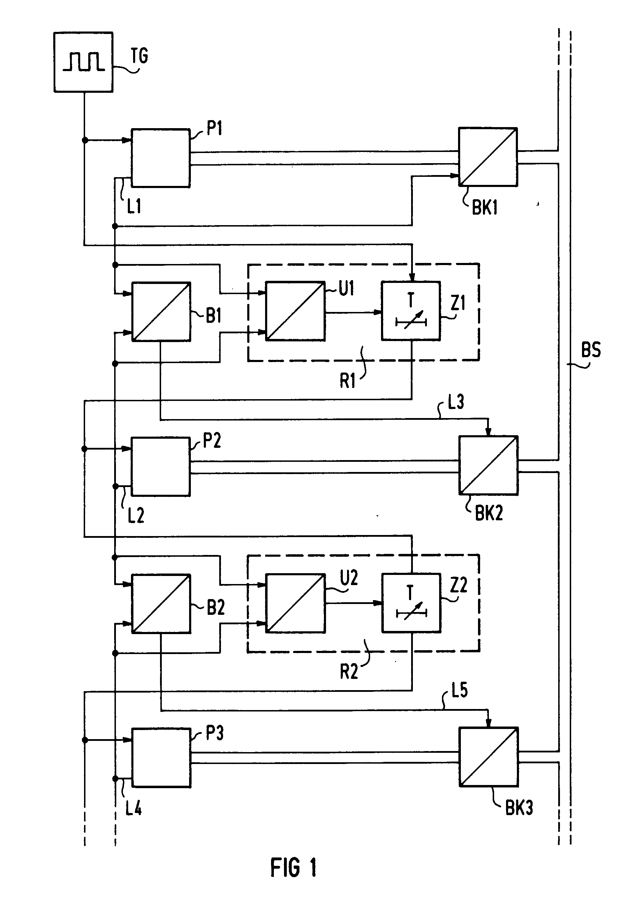

In der Darstellung gemäß FIG 1 sind drei Prozessoren P1, P2, P3 dargestellt, von denen der Prozessor P1 sozusagen der Masterrechner ist, während die Prozessoren P2 und P3 als erster und zweiter nachrangiger Slaverechner zum Einsatz kommen.

Die drei Prozessoren P1, P2, P3 können über Buskoppelglieder BK1, BK2 und BK3 mit einem Bussystem BS in Verbindung gesetzt werden. Der prioritätsgesteuerte Zugriff erfolgt mit Hilfe von Busarbitern B1 und B2. Dies geschieht prinzipiell folgendermaßen.

Wenn der Prozessor P1 auf das Bussystem BS zugreifen will, löst der über eine Leitung L1 ein entsprechendes Busanforderungssignal aus, das direkt auf das Buskoppelglied BK1 geführt wird und dieses aktiviert. Der Prozessor P1 hat damit unmittelbaren Zugriff auf das Bussystem BS.

Wenn der nachrangige Prozessor P2 auf das Bussystem BS zugreifen möchte, gibt er über eine Leitung L2 eine entsprechende Busanforderung ab, die zum einen an den Busarbiter B1 und zum anderen an den Busarbiter B2 führt. Der Busarbiter B1 prüft nun, ob keine Busanforderung auf der Leitung L1 vorliegt und gibt nur in diesem Fall über eine Leitung L3 ein Freigabesignal an das Buskoppelglied BK2 ab. Sofern noch eine Busanforderung auf der Leitung L1 ansteht, muß der Prozessor P2 mit seiner Verarbeitung eben so lange warten, bis diese Busanforderung zurückgenommen wird.

Wenn der Prozessor P3 über das Buskoppelglied BK3 auf das Bussystem BS zugreifen will, gibt er eine diesbezügliche Busanforderung über eine Leitung L4 ab, die dem Busarbiter B2 zugeleitet wird. Der Busarbiter B2 prüft, ob keine Anforderung des vorrangigen Prozessors P2 auf der Leitung L2 vorliegt und nur wenn eine derartige Anforderung nicht vorliegt, wird die Busanforderung des Prozessors P3 wirksam, indem dann der Busarbiter B2 über eine Leitung L5 ein Freischalten des Buskoppelgliedes BK3 veranlaßt.

Der Verarbeitungstakt der Prozessoren P1, P2 und P3 wird durch einen Taktgeber TG gesteuert, der den Prozessor P1 direkt mit Taktsignalen versorgt und die Prozessoren P2 und P3 ebenfalls mit Taktsignalen versorgt, die jedoch über Zeitglieder Z1 und Z2 geführt werden, die zunächst während des Startens des Systems die Zeittakte unbeeinflußt weiterleiten.

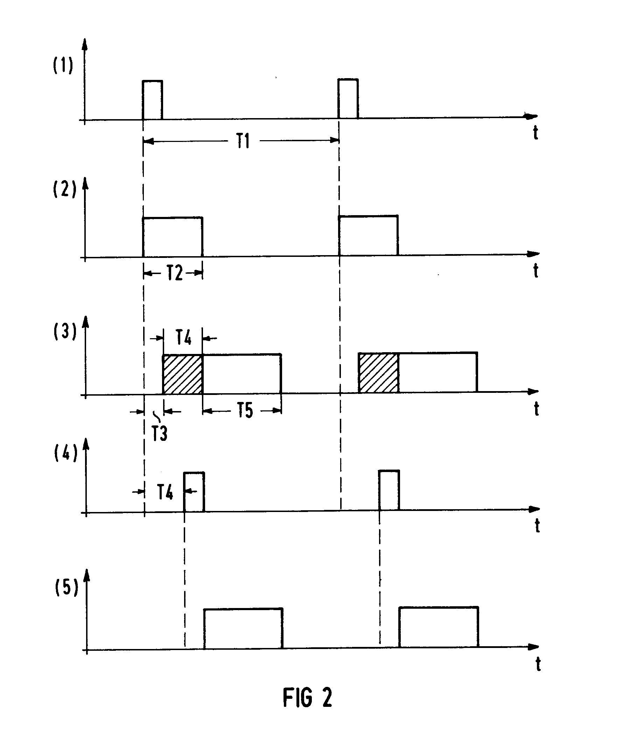

Dem Busarbiter B1 und dem Busarbiter B2 sind Regelstufen R1 und R2 zugeordnet, die gestrichelt angedeutet sind, und die das oben angegebene Zeitglied Z1 bzw. Z2 sowie Umsetzer U1 und U2 beinhalten. Der Umsetzer U1 registriert jeweils die Zeitspanne, die zwischen der vom Prozessor P2 abgesetzten Busanforderung und der Rücknahme einer gegebenenfalls vorliegenden Busanforderung des Prozessors P1 besteht. Der Umsetzer U2 registriert diese Zustände für die Anforderung des Busses durch den Prozessor P3 und die Freigabe des Busses durch den Prozessor P2. Die jeweils registrierte Zeitspanne, die gegebenenfalls über mehrere Zeittakte gemittelt werden kann, führt dazu, daß der Umsetzer U1 bzw. der Umsetzer U2 die Zeitglieder Z1 bzw. Z2 so beeinflußt, daß diese die Signale des Taktgeber TG um eben die ermittelte Verzögerungszeit verzögern. Dadurch wird vermieden, daß die Prozessoren P2 bzw. P3 aufgrund bevorrechtigter Buszugriffe fortlaufend in Wartepositionen gelangen, was anhand des Diagrammes gemäß FIG 2 im folgenden noch veranschaulicht wird.

In der Darstellung gemäß FIG 2 ist in einem Diagramm 1 der Verlauf des Signales des Taktgebers TG gezeigt. In einem periodischen Abstand, der durch eine Zeit T1 bestimmt ist, werden entsprechende Taktsignale geliefert, deren aufsteigende Flanken als taktgebend für das System angenommen werden.

Im Diagramm 2 ist angenommen, daß jeweils mit der positiven Flanke eines Taktes gemäß Diagramm 1 der Prozessor P1 für eine Zeitspanne T2 für einen Zeitblock Zugriff auf das Bussystem BS nimmt. Die zeitliche Koinzidenz ist dabei durch senkrechte gestrichelte Linien angedeutet.

Im Diagramm 3 ist gezeigt, was passieren würde, wenn der Prozessor P2 mit Konflikt zum Prozessor P1 seinen blockweisen Zugriff auf das Bussystem nehmen will. Angenommen sei ferner, daß der Prozessor P2 jeweils mit einer Zeitverzögerung um eine Zeit T3 seine Busanforderung absetzt. Der Busarbiter B1 sperrt dann den Prozessor P2 für die Dauer einer Zeit T4 und erst dann kann der Prozessor P2 beispielsweise für eine Zeit T5 Zugriff auf das Bussystem BS nehmen. Die Wartezeit ist jeweils schraffiert angedeutet. Wenn der Prozessor P2 innerhalb einer Zeitdauer T1 jeweils eine zyklische Verarbeitung vornehmen kann, steht ihm zwar ein ausreichend lange Zugriffszeit T5 für den Zugriff zum Bussystem zur Verfügung, jedoch wird die Verarbeitungszeit um die Wartezeit T4 verringert. Diese Zeit stellt sozusagen eine Totzeit für das Gesamtsystem darstellt.

Im Diagramm 4 ist der erfindungsgemäß eingeregelte Zustand dargestellt, bei dem die Takte des Taktgebers TG mit Hilfe des Zeitgliedes Z1 um eben die zuvor ermittelte Wartezeit T4 verzögert werden.

Das führt dazu, daß eine Busanforderung des Prozessors P2 nunmehr ohne Konflikt mit dem Prozessor P1 unverzüglich aktiviert werden kann, wie dies im Diagramm 5 gezeigt ist.

Das Gesamtsystem startet seinen Betrieb also als arbitrierendes System, es wird die jeweilige Konfliktzeit ermittelt und es erfolgt eine darauf abgestimmte Verzögerung des Verarbeitungstaktes der zuvor als wartepflichtig erkannten Prozessoren. Damit geht das System sozusagen in die eingangs geschilderte Zeitscheibensteuerung über. Unnötige Wartezeiten der prioritätsniedrigen Prozessoren entfallen. Die Arbitrierschaltung bleibt jedoch im Hintergrund aktiv. Sollte aber im eingeregelten Betrieb dennoch ein Kollisionsfall auftreten, wird dieser prioritätsgerecht beseitigt.

**Patentansprüche**

1. Einrichtung zum Betrieb eines Mehrprozessorsystems, insbesondere einer numerischen Steuerung, bei dem die einzelenen Prozessoren mittels Busarbitern und von diesen angesteuerten Buskoppelgliedern prioritätsgerecht an ein gemeinsames Bussystem schaltbar sind und wobei die jeweils im Verarbeitungstakt erfolgenden Busanforderungen jeweils blockweise zusammengefaßt sind, **dadurch gekennzeichnet,** daß Schaltmittel (U1,U2) zum registrieren der jeweiligen bei Arbitrieren anfallenden Wartezeit (T4) der Prozessoren (P2,P3) vorgesehen sind, und daß ferner Mittel (Z1,Z2) zum Verzögern der weiteren Buszugriffsanforderungen der wartepflichtigen Prozessoren (P2,P3) vorgesehen sind, wobei die Verzögerungszeit (T4) dieser Mittel (Z1,Z2) so eingestellt wird, daß diese mindestens der zuvor registrierten Wartezeit entspricht.

2. Einrichtung nach Anspruch 1, **dadurch gekennzeichnet,** daß die Mittel (Z1,Z2) den jeweiligen Verarbeitungstakt der wartepflichtigen Prozessoren (P2, P3) verzögern.

FIG 1

FIG 2

Europäisches
Patentamt

EUROPÄISCHER
RECHERCHENBERICHT

Nummer der Anmeldung

EP 90 11 8137

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 156 921 (FANUC LTD) <br> * das ganze Dokument * <br> — — — | 1,2 | G 05 B 19/403 <br> G 06 F 15/16 |
| Y | IBM TECHNICAL DISCLOSURE BULLETIN. vol. 30, no. 5, Oktober 1987, NEW YORK US Seiten 163 - 172; "SYNCHRONISED DUAL 8051 SHARED RAM SYSTEM" <br> * das ganze Dokument * <br> — — — | 1,2 | |
| A | IBM TECHNICAL DISCLOSURE BULLETIN. vol. 24, no. 7B, Dezember 1981, NEW YORK US Seiten 3891 - 3893; A. Blum: "MULTIPLE CLOCK TRANSFER SYSTEM" <br> * das ganze Dokument * <br> — — — — — | 1,2 | |

RECHERCHIERTE
SACHGEBIETE (Int. Cl.5)

G 05 B
G 06 F

Der vorliegende Recherchenbericht wurde für alle Patentansprüche erstellt

| Recherchenort | Abschlußdatum der Recherche | Prüfer |
|---|---|---|
| Den Haag | 15 April 91 | NETTESHEIM J.F. |